Europäisches Patentamt

(19) European Patent Office  (11) Publication number: **0 048 564**

Office européen des brevets  **A2**

(12) **EUROPEAN PATENT APPLICATION**

(21) Application number: **81304066.4**  (51) Int. Cl.³: **F 16 D 3/26**

(22) Date of filing: **07.09.81**

(30) Priority: **23.09.80 GB 8030718**

(43) Date of publication of application:
**31.03.82 Bulletin 82/13**

(84) Designated Contracting States:
**BE DE FR GB IT SE**

(71) Applicant: **AUTOMOTIVE PRODUCTS LIMITED**
**Tachbrook Road**
**Leamington Spa Warwickshire CV31 3ER(GB)**

(72) Inventor: **Eames, Peter**
**28 Brookfield Road Cubbington**
**Leamington Spa Warwickshire CV32 7NF(GB)**

(54) Universal joints.

(57) A universal joint comprising two forked ends (11) opposed at right angles and engaging an interposed ball (15). Bearing segments (19) are secured around the ball (15) and interposed between adjacent fork arms (12) of the fork ends so that the segments restrict the fork ends to pivotal movement around the ball in a single plane. The segments (19) are secured to the ball by radial projections (17) and (18), preferably studs (17), or a through bolt (18). This construction produces a joint having a large degree of articulation.

Also there is provided a universal joint in which one of the forked shaft ends (111) has an elongated slot (112) between the fork arms (113) allowing the shaft end (111) to move linearly relative to the ball.

Fig.1

Fig.2

EP 0 048 564 A2

## "Universal Joints"

This invention relates to universal joints and in particular to such joints as are used in the steering column or gearchange mechanisms of motor vehicles.

A known universal joint is illustrated in British Patent No. 960 313 and comprises two forked shaft ends opposed at right angles and pivotally engaging on an interposed ball. An array of bearing segments are secured around the periphery of the ball between adjacent fork arms of the respective shaft ends. The segments act to transmit rotational torque from one fork end to the other and are held in place by a surrounding shell.

A disadvantage of this type of construction is that the shell surrounding the segments limits the articulation of the joint.

It is the object of the present invention to provide a universal joint in which the above problems are ameliorated.

Accordingly there is provided a universal joint comprising two forked shaft ends opposed at right angles and pivotally engaging an interposed ball and an array of bearing segments secured around the periphery of the ball and interposing between adjacent fork arms of the shaft ends characterised in that the ball has radial projections thereon whereby the segments are secured to the ball.

The projections on the ball could either be integral thereon so that the ball and projections form a 'spider' or could alternatively be formed from bolts or studs, or other like means which are secured to the ball after the segments have been located in place.

Also according to this invention there is provided a universal joint comprising two formed shaft ends opposed at right angles and pivotally engaging an interposed ball characterised in that at least one of the two forked shaft ends engages the ball by means of an elongated slot between the fork arms allowing the shaft end to move linearly relatively to the ball.

Preferably at least one of the two forked ends engages the ball by means of an elongated slot between the fork arms allowing the respective shaft to move relatively to the ball in the direction of its own axis.

The invention will be described by way of example and with reference to the accompanying drawings in which:-

Fig. 1 is an elevation of a joint according to this invention;

Fig. 2 is a section on the line II-II of Fig. 1;

Fig. 3 shows the joint in Fig. 1 in its fully articulated position; and

Fig. 4 is an elevation of another alternative fork end which may also be utilised with the joint shown in Fig. 1.

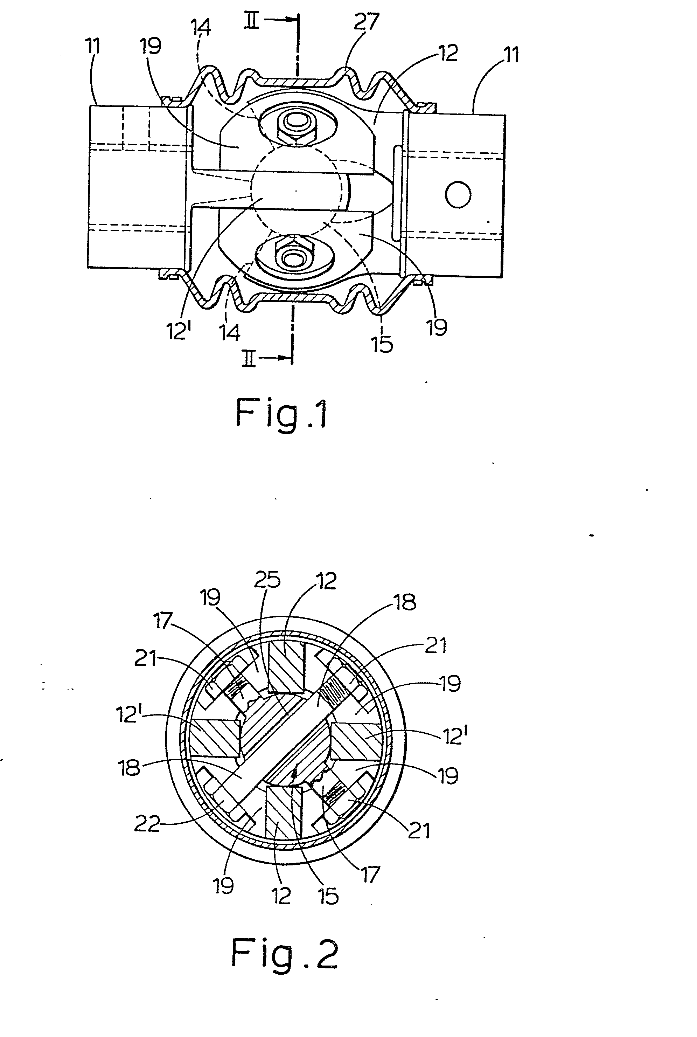

With reference to Figs. 1, 2 and 3, a universal joint has two forked shaft ends 11 each of which has two flat fork arms 12. The two fork arms 12 define therebetween a space shaped as a sector of a circle which extends just beyond the semi circle so that the fork arms 12 can embrace a ball 15 located in the space. The end faces 14 of the fork arms 12 are flat surfaces which are radially aligned relative to the ball 15.

The ball 15 has four equiangularly spaced radial projections 17 and 18 on one circumference thereof. One pair of projection 17 is constituted by diametrically opposed studs 17 formed integrally with the ball 15 and the other pair of diametrically opposed projections 18 are formed by a through bolt 18 which is received in a diametral hole 25 in the ball 15, so that when the ball 15 is fully fitted with the studs 17 and bolt 18 the ball 15 resembles a cruciform with a ball at the centre. Such a configuration is commonly known as a 'spider'. Alternatively the hole 25 could be threaded and the through bolt 18 replaced by two studs (not shown).

The forked shaft ends 11 are fitted sideways over the ball 15 and fixed studs 17 so that the two forked ends 11 pivotally engage the spherical surfaces of the ball 15 from opposite directions. The fork arms 12 of the forked ends are interdigitated around the ball so that the two forked ends are orientated to lie in planes mutually at right angles to each other.

Four bearing segments 19 substantially in the form of quadrants are arranged in a circumferential array around the ball, each segment being located between circumferentially adjacent fork arms 12, the adjacent arms 12 and 12' being each on a different forked end. The segments 19 are each fixed to the ball 15, two by the fixed studs 17 and two by the through bolt 18. The segments 19 are held radially in position by nuts 21, or in one case by the head 22 of the bolt 18, countersunk into the outersurfaces of the segments so that the radial end faces of each segment act as bearing surfaces for the fork arms 12. The positions of the nuts are adjusted to vary the torque load exerted by the bearing surfaces of the segments on the flat sides of the fork arms 12. The segments 19 can be formed from a plastics material eg. polyamide or acetal resin, or from a sintered metal.

The segments 19 restrain the pivotal movement of each end shaft 11 relative to the ball to movement in a single plane, being the plane of the flat fork arms, around the ball, the planes of movement being mutually perpendicular. The segments 19 also provide for the transmission of rotational torque from one fork end to the other.

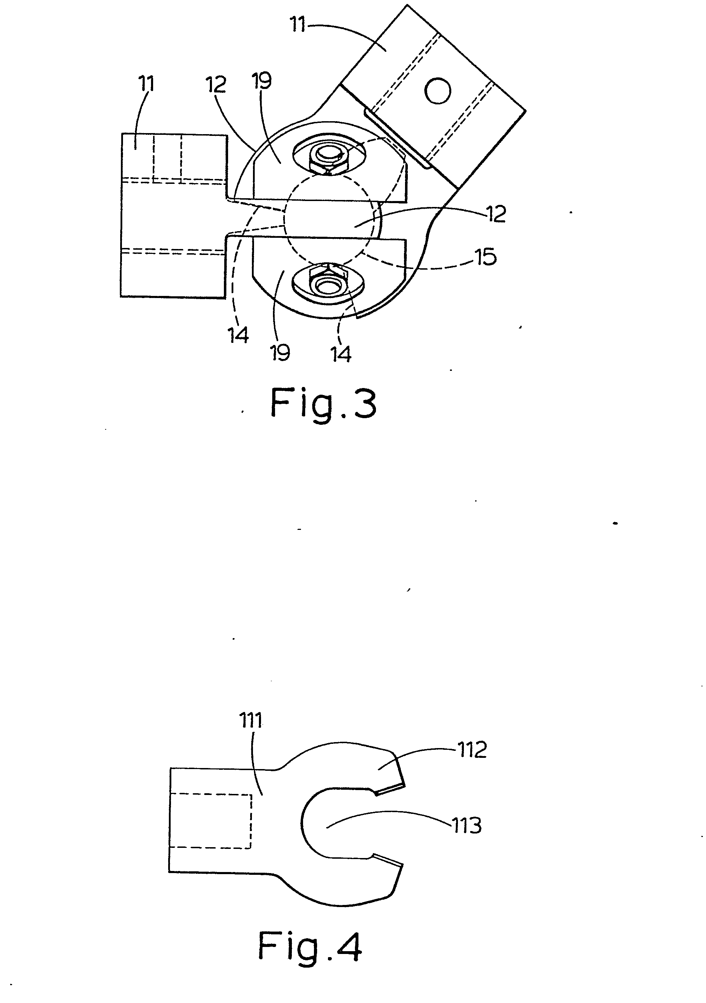

The flat face ends 14 of the fork arms 12 on the shaft ends 11 serve to limit the articulation of the joint by abutment with the other of the fork ends. Because the faces 14 are radial relative to the ball 15 the whole end face comes into contact with a co-operating radially directed surface on the arm, see Fig. 3. The articulation between the fork ends is approximately 50$^{\circ}$.

The whole universal joint is surrounded by an elastomeric boot 27.

Because of the large degree of articulation it is preferable for the segments 19 to be each secured to the ball by a square cross-section stud 17 or bolt 18 which co-operates with a like-hole in the segment to prevent the respective segment from moving with the arms 12 during extremes of articulation.

With reference to Fig. 4 a forked shaft end 111 has fork arms 112 that define a space 113 therebetween on the shape of an elongated circle, such that the fork end 111 is free to move axially relative to the ball 15 that is axially with respect to the longitudinal axis of the shaft, as well as pivot around the ball 15. A universal joint in which it is desired to have some linear movement relative to the ball as opposed to rotational movement about the ball, comprises at least one forked shaft end 111, used in combination with a shaft end 11 as illustrated in Figs. 1 to 3. Alternatively if a large amount of axial movement is required, two shaft ends 111 can be utilised in combination with a ball 15.

When a joint incorporates a shaft end 111 with an elongated space 113 between the fork arm 112, in the linearly unextended position the articulation will be reduced as when compared with a joint as in Fig. 1 and 3.

## Claims

1.    A universal joint comprising two forked shaft ends (11) opposed at right angles and pivotally engaging an interposed ball (15) and an array of bearing segments (19) secured around the periphery of the ball (15) and interposing between adjacent fork arms (12) of the shaft ends characterised in that the ball (15) has radial projections (17) (18) thereon whereby the segments (19) are secured to the ball.

2.    A joint as claimed in Claim 1, characterised in that two diametrically opposed projections (17) are formed as studs formed integrally with the ball, and the other two diametrically opposed projections (18) are anchored in a diametral hole (25) passing through the ball and at right angles to the studs.

3.    A joint as claimed in Claim 2, characterised in that the other projections (18) are constituted by a bolt passing through the ball and two opposed segments.

4.        A joint as claimed in anyone of Claims 1 to 3, characterised in that each fork arm (12) has an end face (14) thereon that is radially aligned relative to the ball (15).

5.        A joint as claimed in anyone of Claims 1 to 4, characterised in that the segments (19) are each secured to the ball (15) by a projection (18) having a cross-section that co-operates with a hole through the segment to prevent rotation of the segment about the projection.

6.        A universal joint comprising two forked shaft ends (11) opposed at right angles and pivotally engaging an interposed ball (15) characterised in that at least one of the two forked shaft ends (11) engages the ball (15) by means of an elongated slot (113) between the fork arms (112) allowing the shaft end (111) to move linearly relatively to the ball.

Fig.1

Fig.2

0048564
1/2

Fig.3

Fig.4